# NEW EUROPEAN PATENT SPECIFICATION

(11) **EP 0 171 955 B2**
(45) Date of publication and mention of the opposition decision: **01.06.1994**
(45) Mention of the grant of the patent: 21.03.1990
(21) Application number: 85305324.7
(22) Date of filing: 25.07.1985
(51) Int. Cl.: C08K 3/34, C04B 26/02, C08L 33/04, C08L 63/00, C08L 67/06

(54) **Simulated marble article**
Gegenstand aus Marmorimitation
Objet en imitation de marbre

(30) Priority: 27.07.1984 JP 158188/84; 24.08.1984 JP 177141/84
(43) Date of publication of application: 19.02.1986
(73) Proprietor: INAX CORPORATION, Tokoname-Shi Aichi (JP)
(72) Inventor: Terabe, Seiji, Tokoname-shi Aichi (JP); Ito, Kazuo, Tokai-shi Aichi (JP)
(74) Representative: Baverstock, Michael George Douglas

(56) References cited:
- DE-A- 2 312 258
- DE-A- 2 449 656
- FR-A- 1 132 437
- US-A- 3 847 865
- CHEMICAL ABSTRACTS, vol. 80, no. 20, 20th May 1974, page 41, abstract no. 109408s, Columbus, Ohio, US; & JP-A-73 88 151
- PATENTS ABSTRACTS OF JAPAN, vol. 8, no. 122 (C-227)[1559], 8th June 1984; & JP-A-59 33 308
- Taschenbuch der Kunststoff-Additive, Carl Hanser Verlag, München, 1979; pages 341-342
- Chemical Abstracts 103: 88729 y
- Römmpps Chemie Lexikon, 9. Auflage, 1981, S. 5158-9

## Description

The present invention relates to a simulated marble article. In particular, it relates to a simulated marble article having a high resistance to abrasion and a high transparency.

Heretofore, simulated marble articles of resin concrete comprising a resin matrix of, e.g., polyester or acrylic resin, and a filler of e.g., calcium carbonate, calcium sulfate, clay, silica, calcium silicate or alumina trihydrate, are known (see: U.S. Patents Nos. 3,405,088 and 3,847,865). Such simulated marble articles are used as building products, kitchen and bathroom counter tops, table plates, dresser tops, vanity tops, shelving, wainscoting and baths, among others.

Generally, simulated marble articles of resin concrete are produced by mixing a prepolymer with a polymerization initiator, a filler and other additives, and effecting vacuum degassing to obtain a mixture in the form of a slurry. The filler has a particle size in the range of from several micrometers to 0.5 millimeter. The mixture in the form of a slurry is poured into a mold and allowed to stand at room temperature, or heated at a raised temperature to cure the slurry. The resultant shaped article is then subjected to cutting, bending by heat, lamination, surface finishing, etc. to obtain the above-mentioned kitchen and bathroom counter tops, table plates, dresser tops, baths, etc.

The prior art resin concretes comprise, as a filler, an inorganic powder having a wide range of particle sizes up to 0.5 millimeter and, therefore, adhesion between the filler and the resin matrix is weak. This results in the filler becoming detached by scratching, abrasion, etc. To eliminate this defect, a hard coating or a gel coating is formed on the surface of a resin concrete, which complicates the production process and thereby increases the cost.

Hard coating of the article, to improve the resistance to abrasion, is carried out by optionally first precoating the surface of the resin concrete body with a primer; then coating that surface with a solvent-diluted hard coating agent such as an organosilane hard coating agent or a polyfunctional acrylic hard coating agent; drying the article to remove the solvent from the coating; and curing the resultant article by heating, or ultraviolet (UV) radiation etc. The above hard coating process has a problem in that it involves several processing steps. Furthermore, control of the temperature and humidity after coating a hard coating agent on the surface of a resin concrete body is difficult since the solvent must be gradually removed from the coated layer to ensure that cracks do not appear, and this entails the need to use large-scale air conditioning equipment. Moreover, the characteristics of the hard coating agents limit the thickness of the hard coating layer to an extremely thin thickness of from 3 to 8 f..lm, resulting in insufficient hardness and strength of the coating layer. Furthermore, the adhesion between the substrate of the resin concrete body and the hard coating layer is insufficient except for a limited combination thereof, and thus it is likely that the coating layerwill be easily peeled from the substrate.

Another way to improve the resistance to abrasion is by gel coating, which is generally carried out for aesthetic and protective purposes on shaped articles of resin concrete, fiber reinforced plastics, etc. For example, in the above process, isophthalic acid resins are used for the polyester resins. In this process, a resin layer which does not contain glass fibers but may contain a filler such as calcium carbonate, silica etc. is formed on the surface of a mold and, after gelation occurs, lamination is carried out to produce a shaped article with a gel coating layer. Ashaped article with a gel coating layer has an excellent resistance to water and chemicals, and a high mechanical strength.

However, the lamination must be carried out after the gelation of the gel coating layer, which makes the shaping process complicated. In particular, it is difficult to provide a molded article with a gel coating layer by a single shaping process and layer-peeling is likely to occur due to insufficient adhesion.

Furthermore, it is desirable to impart a high transparency to the resin concrete to give, to a simulated marble article, an appearance of high quality, preferably while allowing various resin materials and additives to be used in order to obtain the desired properties of the resin matrix or a simulated marble article for various applications.

We have now developed a simulated marble article which has an improved resistance to abrasion and a higher transparency and which may be produced by a simple process.

Accordingly, the present invention provides a simulated marble article, comprising a filler distributed in a resin matrix, wherein the filler is of amorphous hydrated silicate particles having an average particle size of 1 f..lm or less in an amount of from 30% to 70% by weight of the total weight of the filler and the resin matrix, the difference between the refractive indices of the filler and the resin matrix being up to 0.05, preferably 0.01 to 0.03. Preferably the filler has an average particle size of 0.6 µm or less.

Simply by reducing the particle size of the filler in a resin concrete to 1 µm or less, the resistance to abrasion of the resin concrete, i.e., a simulated marble article, can be remarkably improved and peeling of the filler can be prevented. If the filler has an average particle size of more than 1 µm, the filler is easily peeled from the surface of a resin conrete or a simulated marble article and the resistance to abrasion of the resin concrete is insufficient.

The amount of filler should be in the range of from 30% to 70% by weight of the total weight of a filler and resin matrix, or the resin concrete. Less than 30% by weight of a filler cannot attain the desired increase in the mechanical strength of the resin concrete, whilst more than 70% by weight of the filler degrades the moldability and causes properties such as bending and resistance to abrasion of the resin concrete to deteriorate.

The transparency of the resin concrete, i.e., a simulated marble article, may be improved by reducing the difference of the refractive indices between the filler and the resin matrix. To obtain the appearance of a natural marble, the presence of a slight difference in the refractive indices between the filler and the resin matrix is, however, necessary. Thus, a difference between the refractive indices of the filler and the resin matrix up to 0.5, preferably 0.01 to 0.03 gives a desirable higher transparency and high quality to a simulated marble article.

An amorphous hydrated silicate filler is suitable as a filler for a simulated marble article since the material has a suitable colour (white) and an appropriate refractive index close to that of the resin matrix, which allows a certain transparency and a high quality to be achieved. Although a colorant may be added to give an article a similar colour to marble, it cannot attain this transparency and high quality.

Furthermore, an amorphous filler is advantageous since it has a constant refractive index irrespective of direction, allowing a high transparency and thus a high quality. Crystalline fillers, which have been used as fillers for resin concretes in the prior art, have different refractive indices depending on direction, which makes it difficult to adjust the refractive index of the filler to differ only by up to 0.05, preferably 0.01 to 0.03 from that of the resin matrix, since particles of the filler have a range of refractive indices in different directions.

Furthermore, the refractive index of an amorphous hydrated silicate can be adjusted to be in a particular range, which allows the use of a certain range of resin materials as the resin matrix without losing the high transparency and high quality of the resin concrete, i.e., a simulated marble article. This cannot be achieved by a crystalline material which has a fixed refractive index. In practice, the desired shrinkage, hardness, flexibility, chemical resistance, water-proofing property, heat resistance, mechanical strength, etc. of a simulated marble article are determined, depending on the production process and various applications, by selecting the resin material, additives such as a cross-linking agent, an accelerating agent, a parting agent and a colorant. When a particular resin material and additives are selected, the refractive index of the resin matrix is determined. In such a case, an amorphous hydrated silicate filler has an advantage that the refractive index of the filler may be chosen so as to differ by up to 0.05, preferably 0.01 to 0.03 from that of the resin matrix by the selection of the particular composition of the amorphous silicate.

An amorphous hydrated silicate may be expressed by the general formula: 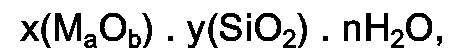 wherein M is a metal selected from B, Be, Mg, Ca, B, Al, Zn, Ti, Zr and Sn; a is 1 or 2; b is 1, 2 or 3; n>0; x>0; and y>0.

The amorphous hydrated silicate used in the present invention may contain a small amount of impurities such as other metal oxides, hydroxides and carbonates.

Of the above metals, Al, Mg and Ca are preferred, due to cost and to the controllability of the refractive index of an amorphous hydrated silicate.

Examples of ranges of the refractive index of some amorphous hydrate silicates are given below: Amorphous hydrated aluminium silicate 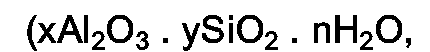 wherein 0<x/y<0.75, preferably 0.05≦x/y≦0.50) has a refractive index in the range of 1.47 to 1.54. Amorphous hydrated magnesium silicate 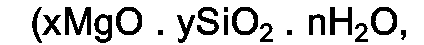 where O<x/y₋-1.50, preferably 0.1≦x/y≦0.75) has a refractive index in the range of 1.47 to 1.50. Amorphous hydrated calcium silicate 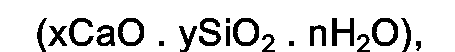 wherein O<x/y₋-1.25, preferably 0.1 ≦x/y≦1.00) has a refractive index in the range of 1.47 to 1.56. The respective preferred ranges for x/y in the formulas also give the respective ranges of the refractive index.

The amorphous hydrated silicate used in the present invention may be produced by hydrothermal synthesis, a sol-gel method using metal alkoxides, and chemical co-precipitation using water glass. The primary particles of the amorphous hydrated silicate so-obtained have an average particle size of 1 µm or less, and some of these form agglomerates or secondary particles having an average particle size of 5 to 20 µm. An improved abrasion resistance, however, may be achieved by using as a filler amorphous hydrated silicate particles having an average primary particle size of 1 µm or less.

Although the filler used in the present invention should have an average particle size of 1 µm or less, part of the filler may be replaced by glass powder, to decrease the production costs. The amount used will not reduce the resistance to abrasion of the simulated marble article. Glass powder is difficult to divide into an average particle size such as 1 f..lm or less but has a good transparency, a high hardness and is cheap, and thus is suitable as a replacement for a part of a filler. Glass powder may have a transparency in the range of from 1.46 to 1.60. Such a glass powder has an average particle size of from 10 to 50 µm. The weight ratio of the glass powder to a fine filler (1 f..lm or less) should be in the range of from 1:10 to 3:2, preferably from 1:4 to 2:3.

Furthermore, a part or all of the filler in a portion of the resin matrix remote from the surface of the simulated marble article, where improvement of abrasion resistance is not necessary, may be replaced by another filler having an average particle size of 10 µm or more. The portion of the resin matrix where the abrasion resistance is to be improved is only a thin layer adjacent to the surface portion of the simulated marble article. Therefore, a part or all the filler distributed in the remaining portion may be replaced by a cheaper filler, or a filler having larger-sized particles. This partial replacement may also enhance the aesthetic effect based on the two layer structure. The larger-sized particle filler, having an average particle size of 10 µm or more, may be calcium carbonate, silica sand, glass powder.

The resin matrix of the simulated marble article according to the present invention is not new and may comprise any resin used in the prior art, including acrylic resins such as methyl methacrylate polymers, polyester resins such as unsaturated polyester resin, (see, for example, U.S. Patent No. 3,847,865).

Examples of the resin materials which may be used in the invention. have a refractive index as shown below:
polymethylmethacrylate-1.49; polystyrene-1.60; a copolymer of styrene and methacrylate-1.50 to 1.59; a copolymer of styrene and acrylate-1.43 to 1.59; a copolymer of methacrylate and acrylate-1.43 to 1.69; a blend thereof-1.43 to 1.60; an epoxy resin-1.55 to 1.60; and a polyester-1.52 to 1.58.

Asimulated marble article of a resin concrete according to the present invention may further contain other additives such as coupling agents, colorants, and parting agents (lubricants). When glass powder is incorporated into a resin concrete, it is preferable to also add a coupling agent such as a silane coupling agent or a titanium coupling agent.

The production of a simulated marble article according to the invention may be carried out by adding resin material such as an acrylic prepolymer with from 0.01 to 1.0% by weight of a polymerization initiator and from 30% to 70% by weight of an amorphous hydrated silicate filler having an average particle size of 1 µm or less and, optionally, a cross-linking agent, a coupling agent, a parting agent, a reaction accelerating agent, and a colorant; mixing these ingredients with stirring; degassing the mixture to obtain a compound in the form of a slurry; pouring the compound into a mold; and curing the mold by heating to obtain a shaped article, i.e., a simulated marble article.

The formation of the resin matrix is based on considerations such as the required refractive index, polymerization rate, and the properties of the polymer. Examples of the refractive indices of typical resin materials have been listed previously. Polymers formed from polymerizable monomers or oligomers containing an aromatic ring and having chlorine or bromine in the molecule thereof have a larger refractive index while those containing fluorine in the molecule thereof have a lower refractive index. These factors may be used to obtain a desired refractive index of a resin matrix. The resin matrix used is also selected to have the desired transparency, and high mechanical strengths such as bending strength, stretching strength, and impact resistance, and high durability to factors such as chemical resistance and weather resistance. The resin matrix is also required to have a good affinity for the amorphous hydrated silicate filler.

The polymerizable syrup used in the present invention is generally a blend of polymerizable monomers and oligomers.

The viscosity of the resin material used is preferably in the range of from 50 cp (0.05 Ns/m²) to 300 cp (0.3 Ns/m²). Fine filler particles having an average particle size of 1 µm or less would precipitate in a resin material having a viscosity below 50 cp (0.05 Ns/m²), and this does not allow an increase in the resistance to abrasion of the surface layer of the resin concrete. A large amount of filler cannot be incorporated in a resin material having a viscosity above 300 cp (0.3 Ns/m²), and this also does not allow an increase in the resistance to abrasion of the surface layer of the resin concrete.

Preferred polymerization initiators are the organic peroxides such as benzoyl peroxide (BPO), lauroyl peroxides (LPO) and diisopropyl peroxy dicarbonate (IPP), and azobis-system radical polymerization initiators such as 2,2'-azobisisobutyronitrile (AIBN). Less than 0.01% by weight of a polymerization initiator will not initiate polymerization orwill need too long a period of time for the polymerization to occur even if polymerization is begun. More than 1.0% by weight of a polymerization initiator may cause foaming of the resin material due to the heat generated during polymerization.

In practice, a polymerization initiator is added to and dissolved in a resin material, to which a filler and optionally additives such as a cross-linking agent, a parting agent, a reaction accelerator, a coupling agent, and a colorant are then added and the reactants mixed in a mixer. The mixture is vacuum degassed to obtain a compound in the form of a slurry. The slurry is then poured into a conventional mold such as a glass mold, an FRP mold or a metal mold and, cured by heating. The heating conditions comprise a temperature in the range of from room temperature to 80°C and a period of time in the range of from 0.5 to 30 hours, preferably from 1 to 10 hours.

The replacement of a part or all of a fine filler of an amorphous hydrated silicate in a portion of a resin matrix remote from the surface of a simulated marble article by a coarse fitter may be achieved by precipitating the fine and coarse fillers in a slurry of the resin matrix for a certain period and then curing it. The separation of fine and coarse fillers is based on the difference in the precipitation speeds of the fillers. The precipitation speed of a particle may be expressed by the following Stokes' law: 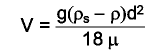 wherein,
V: precipitation speed
µ: viscosity of resin
g: acceleration of gravity
pₛ: density (specific weight) of particle
p: density (specific weight) of resin
d: particle size.

As seen in the above equation, the difference of precipitation speeds of different particles depends on the square of the particle sizes of the particles, as well as on the densities of the particles, the viscosity of the resin etc. Thus, the use of two fillers having average particle sizes of 1 f..lm or less and 10 µm or more respectively is sufficient to obtain a two layer structure in a resin concrete in which only a fine filler having an average particle size of 1 µm or less is present in the portion of the resin matrix near the surface of a simulated marble article, but both fine and coarse fillers having average particle sizes of 1 µm or less and 10 µm or more respectively are present in the portion of the resin matrix remote from the surface of the simulated marble article. Of course, the selection of the desired densities of the two fillers, to accelerate the formation of the two layer structure, is preferred to improve production to from 0.5 to 30 hours. In particular, allowing the resin matrix to stand from 1 to 10 hours to cause precipitation of a coarse filler is preferred in practice.

In production, a polymerization initiator is added to and dissolved in a resin material, fine and coarse fillers and, optionally, additives such as a cross-linking agent, a parting agent, a reaction accelerator, are added thereto and mixed in a mixer. The mixture is vacuum degassed to obtain a compound in the form of slurry, which is then poured into a conventional mold such as a glass mold, an FRP mold or a metal mold and cured by heating. The mold is allowed to stand for the period of time necessary to effect precipitation, followed by curing with heat. The heating temperature is in the range of from room temperature to 80°C. The heating may be carried out during the precipitation. A heating period of from 0.5 to 30 hours is sufficient.

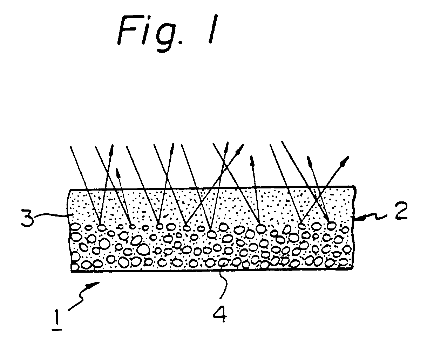

The present invention will be further described with reference to Figure 1 of the drawings which is a section of a simulated marble article according to the present invention.

Figure 1 illustrates a section of a simulated marble article having a two layer structure, in which 1 denotes the article as a whole, 2 the resin matrix, 3 the fine filler and 4 the coarse filler. In this article, the refractive indices of the fine filler 3 and the resin matrix 2 differ only by a range of up to 0.05, preferably 0.01 to 0.03, according to the present invention, thus allowing a high transparency.

Incident light passes through the surface layer and is irregularly reflected by the coarse filler 4 or a deep portion of the article, giving a deep transparency, a high quality, and a particular aesthetic effect.

### Examples

According to a process described before, 11 types of simulated marble articles were produced. The compositions used and the conditions of molding are shown in Table 1. Sampels 1 to 7 belong to the present invention.

Samples 8 to 11 are comparative examples. In the experiments, the amorphous magnesium silicate hydrate used had the formula: 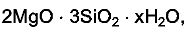 and the amorphous aluminum silicate hydrate had the formula: 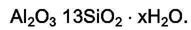 Sample 7 was prepared by molding a polymerizable slurry containing fine and coarse fillers, i.e., amorphous magnesium silicate hydrate having an average particle size of 0.2 µm and calcium carbonate having an average particle size of 60 µm, in a glass mold, followed by heating it at 60°C for 7 hours, during which separation of the coarse filler and curing of the resin matrix occurred. This sample had a surface layer in the resin concrete wherein only a fine filler of amorphous magnesium silicate was present, the thickness ratio of the resin concrete to the surface layer being 2:1.

The resistance to abrasion and percent of light transmittance of the obtained simulated marble articles were examined. The resitance to abrasion was measured by a taber abrasion test according to JIS K6902. The percent of light transmittance was determined from the amount of light transmitted through a sample having a thickness of 0.4 mm when irradiated with white light.

In Table 1, "amount" is based on parts by weight, and "index" means refractive index.

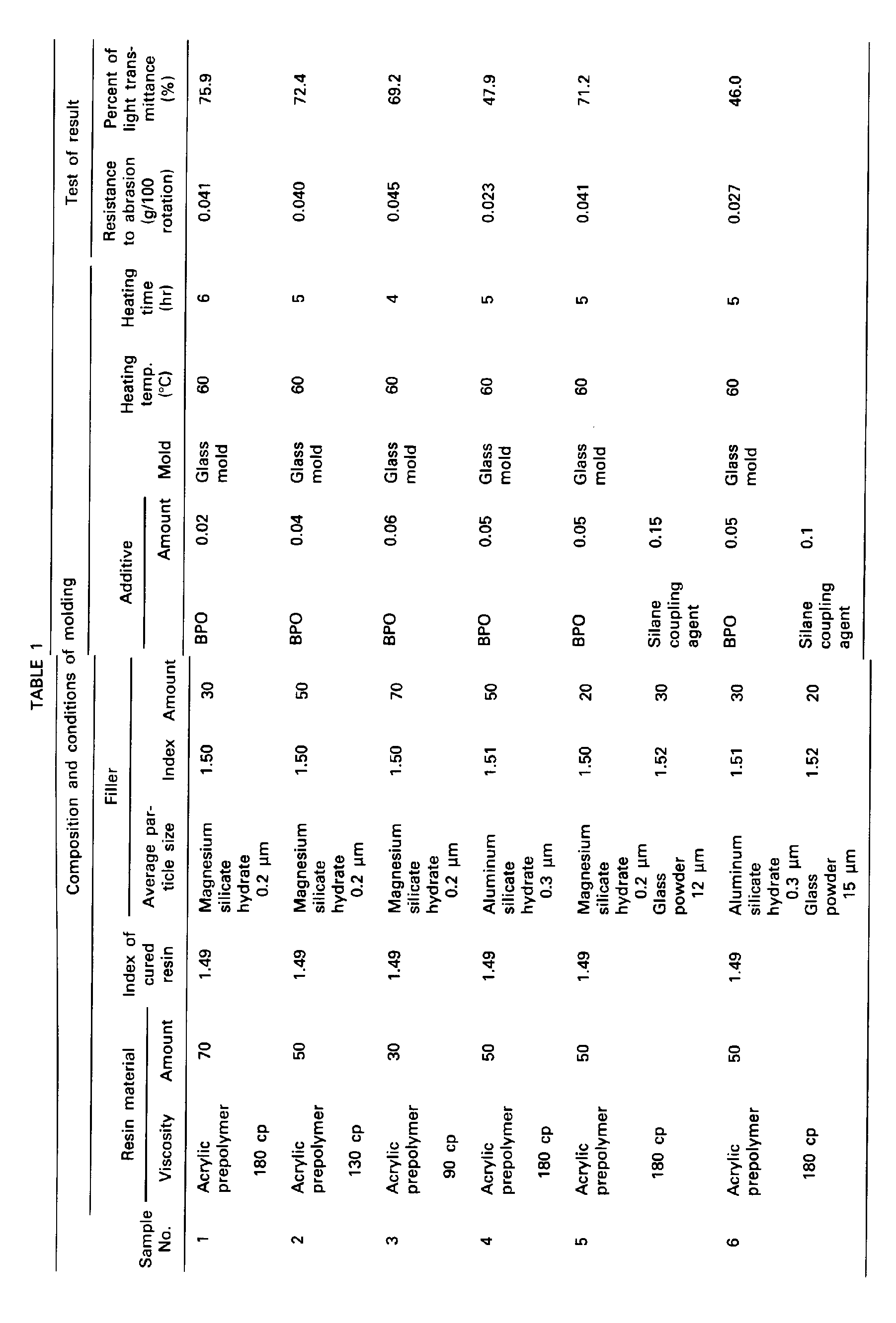

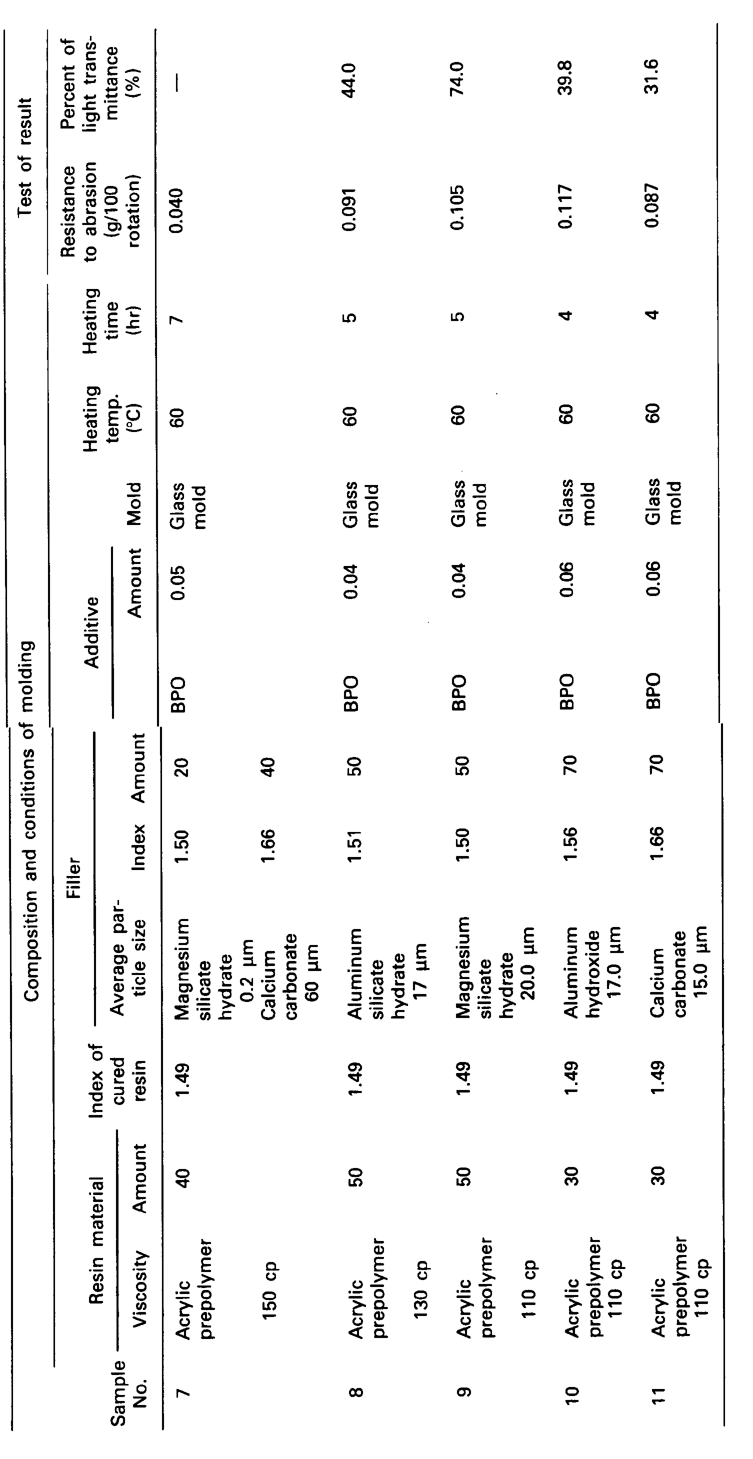

From Table 1, it is clearly seen that the resistance to abrasion abruptly increases when the average particle size of the filler becomes smaller than 1.0 µm. These effects are considered to derive from the fine particle sizes of a filler, which enlarge the specific surface area of the filler and thus increase the adhesion of the filler to the resin matrix, and from a dense filling of the filler in the resin concrete. Further, it is seen that the transparency increases when the difference of the refractive index between a resin matrix and a filler is controlled to be low or in a range of up to 0.05, preferably 0.01 to 0.03. Generally, a difference of transparency of a few percent at a transparency of around 40% is important and can be clearly distinguished by the naked eye, and a difference of about ten percent or more at a transparency of more than 50% or less than 30% is less important. Therefore, all increases of the transparency, seen in Table 1, according to the present invention, are sufficiently advantageous. Thus, the present invention gives an improved transparency and a high quality to a simulated marble article.

## Claims

1. A simulated marble article, comprising a filler distributed in a resin matrix, characterized in that the filler is of amorphous hydrated silicate particles having an average particle size of 1 µm or less in an amount of from 30% to 70% by weight of the total weight of the filler and the resin matrix, the difference between the refractive indices of the filler and the resin matrix being up to 0.05.

2. A simulated marble article as claimed in claim 1 wherein the difference between the refractive indices of the filler and the resin matrix is in the range of from 0.01 to 0.03.

3. Asimulated marble article as claimed in claim 1 or claim 2 wherein the amorphous hydrated silicate has the general formula: x(MₐO_{b}).y(Si0₂).nH₂0, wherein M is a metal selected from B, Be, Mg, Ca, Ba, Al, Zn, Ti, Zr, and Sn; a is 1 or 2: b is 1, 2 or 3 n> 0; x > 0; and y > 0.

4. Asimulated marble article as claimed in claim 3 wherein the amorphous hydrated silicate is xAl₂O₃._{y}SiO₂.nH₂O, wherein 0 < x ≦ 0.75. ^{y}

5. A simulated marble article as claimed in claim 4 wherein 0.05 ≦ x ≦ 0.50. ^{y}

6. A simulated marble article as claimed in claim 3 wherein the amorphous hydrated silicate is xMgO.ySi0₂.nH₂, wherein

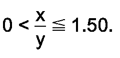

7. A simulated marble article as claimed in claim 6 wherein 0.1 ≦x/y≦0.75.

8. A simulated marble article as claimed in claim 3 wherein the amorphous hydrated silicate is of 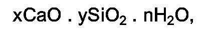 wherein 0<x/y≦1.25.

9. A simulated marble article as claimed in claim 8 wherein 0.1≦x/y<1.00.

10. Asimulated marble article as claimed in any one of the preceding claims wherein the filler has an average particle size of 0.6 µm or less.

11. A simulated marble article as claimed in any one of the preceding claims wherein the resin matrix is an acrylic resin, an epoxy resin or a polyester resin.

12. Asimulated marble article as claimed in any one of claims 1 to 10 wherein the resin matrix is a copolymer of a methacrylate and styrene; a copolymer of an acrylate and styrene; a copolymer of a methacrylate and an acrylate; or a blend thereof.

13. A simulated marble article as claimed in any one of the preceding claims further comprising an additive such as a coupling agent or a colorant.

14. A simulated marble article as claimed in any one of the preceding claims wherein a part of the filler is replaced by glass powder having an average particle size of from 10 to 50 µm and the weight ratio of the glass powder to the filler is in the range of from 1:10 to 3:2.

15. Asimulated marble article as claimed in claim 14 wherein the weight ratio of the glass powder to the said filler is in the range of from 1:4 to 2:3.

16. A simulated marble article as claimed in any one of claims 1 to 13 wherein at least a part of the filler distributed in a portion of the resin matrix remote from the surface of the simulated marble article is replaced by another filler having an average particle size of 10 µm or above.

## Patentansprüche

1. Künstlicher Marmorgegenstand, der ein Füllmaterial enthält, das in einer Kunststoffmatrix verteilt ist, dadurch gekennzeichnet, daß das Füllmaterial von amorphen hydratisierten Silikat partikeln, die eine durchschnittliche Partikelgröße von 1 µm oder weniger aufweisen, in einer Menge von 30 % bis 70 % des Gesamtgewichtes des Füllmaterials und der Kunststoffmatrix gebildet wird, wobei der Unterschied zwischen den Brechungsindizes des Füllmaterials und der Kunststoffmatrix bis zu 0,05 beträgt.

2. Künstlicher Marmorgegenstand, gemäß Anspruch 1, wobei der Unterschied zwischen den Brechnungsindizes des Füllmaterials und der Kunststoffmatrix im Bereich von 0,01 bis 0,03 liegt.

3. Künstlicher Marmorgegenstand, gemäß Anspruch 1 oder 2, wobei das amorphe hydratisierte Silikat die allgemeine Formel hat: x(MₐO_{b}).y(Si0₂).nH₂0, worin M ein Metall ist, das ausgewählt ist aus B, Be, Mg, Ca, Ba, Al, Zn, Ti, Zr und Sn; a 1 oder 2 ist; b 1, 2 oder 3 ist, n>O; x>O; y>O.

4. Künstlicher Marmorgegenstand gemäß Anspruch 3, wobei das amorphe hydratisiertes Silikat xAl₂O₃._{y}SiO₂.nH₂O ist, worin O < x/y Z 0,75 ist.

5. Künstlicher Marmorgegenstand gemäß Anspruch 4, wobei 0,05 ≦ x/y Z 0,50 ist.

6. Künstlicher Marmorgegenstand gemäß Anspruch 3, wobei das amorphe hydratisierte Silikat xMgO.ySi0₂.nH₂0 ist, worin 0 < x/y ≦ 1,50 ist.

7. Künstlicher Marmorgegenstand gemäß Anspruch 6, wobei 0,1 ≦ x/y ≦ 0,75 ist.

8. Künstlicher Marmorgegenstand gemäß Anspruch 3, wobei das amorphe hydratisierte Silikat xCaO.ySi0₂.nH₂0 ist, worin 0 < x/y ≦ 1,25 ist.

9. Künstlicher Marmorgegenstand gemäß Anspruch 8, wobei 0,1 ≦ x/y < 1,00 ist.

10. Künstlicher Marmorgegenstand gemäß einem der vorangegangenen Ansprüche, wobei das Füllmaterial eine mittlere Partikelgröße von 0,6 µm oder weniger aufweist.

11. Künstlicher Marmorgegenstand gemäß einem der vorangegangenen Ansprüche, wobei die Harzmatrix aus einem Acrylharz, einem Epoxyharz oder einem Polyesterharz gebildet wird.

12. Künstlicher Marmorgegenstand gemäß den Ansprüchen 1-10, wobei die Harzmatrix ein Copolymer aus einem Methacrylat und einem Styrol; ein Copolymer aus einem Acrylat und einem Styrol, ein Copolymer aus einem Methacrylat und einem Acrylat; oder ein Gemisch davon ist.

13. Künstlicher Marmorgegenstand gemäß einem der vorangegangenen Ansprüche, der weiter ein Additiv wie einen Kupplungsagens oder einen Farbstoff aufweist.

14. Künstlicher Marmorgegenstand gemäß einem der vorangegangenen Ansprüche, wobei ein Teil des Füllmaterials durch Glaspulver ersetzt ist, das eine durchschnittliche Partikelgröße von 10- 50 µm aufweist, und das Gewichtsverhältnis des Glaspulvers zu dem Füllmaterial im Bereich von 1:10 bis 3:2 liegt.

15. Künstlicher Marmorgegenstand gemäß Anspruch 14, wobei das Gewichtsverhältnis des Glaspulvers zu dem Füllmaterial im Bereich von 1:4 zu 2:3 liegt.

16. Künstlicher Marmorgegenstand gemäß einem der Ansprüchen 1 bis 13, wobei wenigstens ein Teil des Füllmaterials, der in einem von der Oberfläche des künstlichen Marmorgegenstandes entfernten Bereich der Harzmatrix verteilt ist durch ein anderes Füllmaterial ersetzt ist, das eine mittlere Partikelgröße von 10 µm oder mehr aufweist.

## Revendications

1. Elément en imitation de marbre, comprenant une charge répartie dans une matrice de résine, caractérisé en ce que la charge est constituée par particules d'un silicate hydraté amorphe ayant une taille moyenne de particules de 1 µm ou moins, en une proportion de 30% à 70% en poids par rapport au poids total de la charge et de la matrice de résine, la différence entre les indices de réfraction de la charge et de la matrice de résine étant d'au plus 0,05.

2. Elément en imitation de marbre, selon la revendication 1, dans lequel la différence entre les indices de réfraction de la charge et de la matrice de résine est dans la gamme de 0,01 à 0,03.

3. Elément en imitation de marbre, selon la revendication 1 ou 2, dans lequel le silicate hydraté amorphe répond à la formule générale : x (MₐO_{b}). y (Si02). n H₂0, où M est un métal choisi parmi B, Be, Mg, Ca, Ba, AI, Zn, Ti, Zr et Sn; a vaut 1 ou 2; b vaut 1, 2 ou 3; n > 0; x > 0; et y > 0.

4. Elément en imitation de marbre, selon la revendication 3, dans lequel le silicate hydraté amorphe est x AI₂0₃. y Si0₂ . n H₂0, où

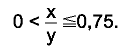

5. Elément en imitation de marbre, selon la revendication 4, dans lequel

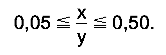

6. Elément en imitation de marbre, selon la revendication 3, dans lequel le silicate hydraté amorphe est x MgO . y Si0₂ . n H₂0, où

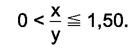

7. Elément en imitation de marbre, selon la revendication 6, dans lequel

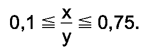

8. Elément en imitation de marbre, selon la revendication 3, dans lequel le silicate hydraté amorphe est x CaO. y Si0₂ . n H₂0, où

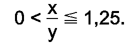

9. Elément en imitation de marbre, selon la revendication 8, dans lequel

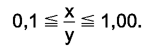

10. Elément en imitation de marbre selon l'une quelconque des revendications précédentes, dans lequel la charge présente une taille moyenne de particules de 0,6 µm ou moins.

11. Elément en imitation de marbre selon l'une quelconque des revendications précédentes, dans lequel la matrice de résine est une résine acrylique, une résine époxy ou une résine polyester.

12. Elément en imitation de marbre selon l'une quelconque des revendications 1 à 10, dans lequel la matrice de résine est un copolymère d'un méthacrylate et de styrène; un copolymère d'un méthacrylate et d'un acrylate; ou un mélange de ceux-ci.

13. Elément en imitation de marbre selon l'une quelconque des revendications précédentes, comprenant en outre un additif tel qu'un agent de couplage ou un colorant.

14. Elément en imitation de marbre selon l'une quelconque des revendications précédentes, dans lequel une partie de la charge est remplacée par une poudre de verre, ayant une taille moyenne de particules de 10 à 50 µm, le rapport en poids de la poudre de verre à la charge étant dans la gamme de 1 : 10 à 3 : 2.

15. Elément en imitation de marbre, selon la revendication 14, dans lequel le rapport en poids de la poudre de verre à ladite charge est dans la gamme de 1 : 4 à 2 : 3.

16. Elément en imitation de marbre selon l'une quelconque des revendications 1 à 13, dans lequel au moins une partie de la charge, répartie dans une zone de la matrice de résine éloignée de la surface de l'élément en imitation de marbre, est remplacée par une autre charge ayant une taille moyenne de particules de 10 µm ou plus.
